# EUROPEAN PATENT APPLICATION

(11) **EP 2 381 397 A1**
(43) Date of publication of application: **26.10.2011**
(21) Application number: 10161030.1
(22) Date of filing: 26.04.2010
(51) Int. Cl.: G06Q 10/00

(54) **Electronic work instruction designed for ISA-95 standard**

(71) Applicant: Siemens Aktiengesellschaft, 80333 München (DE)
(72) Inventor: Raviola, Alessandro, 16156, Genova (IT); Copello, Paolo, 16035, Rapallo (GE) (IT)
(74) Representative: Fischer, Michael

(57) **Abstract**

The present invention relates to a method and a system for providing, to a production process personnel, an electronic work instruction for a production activity, compliant with an ISA-95 standard, the system comprising:
- at least one connection (8a) designed for exchanging at least one electronic work instruction between a production process based on the ISA-95 standard and an Electronic Work Instruction entity (8);
- said Electronic Work Instruction entity (8) designed for being compliant with said ISA-95 standard of the production process and capable of loading and storing at least one electronic work instruction;
- means (10) for accessing the electronic work instruction.

## Description

The present invention relates generally to the automation of production activities, and more specifically to a system and a method for providing and managing personnel electronic work instructions involved in a production activity based on an ISA-95 standard.

The automation of product manufacture requires tools for managing the relevant information involved in the manufacture of a product, at the planning and the production levels. In particular, an accurate modelling of a production process is essential for both scheduling and execution and, eventually, for achieving a good level of operational performance in manufacturing activities. One of these tools, called ISA-95 for International Standard Association-S95, is an international standard for developing an automated interface between an enterprise and a control system of a production process for global manufacturers. The ISA-95 standard is capable of defining how software tools may implement the production process at plant floor level and how to communicate with it, while using a standard terminology between different manufacturers for treating said relevant information.

Generally, the ISA-95 standard might be embedded in, or serve as common basis for the development of a Manufacturing Executing System (MES), i.e. an intermediate layer capable of providing computing machines and software tools between an Enterprise Resource Planning (ERP) upper layer that is in particular dedicated to the planning of production processes, and a process line lower layer that is in particular dedicated to the control of single machines involved in the analysis of the production process or involved in the production process itself.

In other words, the MES is a dynamic information system that drives effective execution of manufacturing operations, by managing production operations from point of order release into manufacturing to point of product delivery into finished goods and by providing mission critical information about production activities to others across the organization and supply chain via bi-directional communication. The MES comprises generally software tools for analysis management and software tools for productive process.

Usually, an ISA-95 standard comprises a complex and hierarchical set of entities capable of representing a production process according to a structural description of said production process. Said entities represent in particular the resources to be used during the execution of a production request. The ISA-95 standard is thus capable modelling a production process, i.e. providing a conceptualization of said production process by representing entities involved in the production process, as well as interactions between these entities.

For example, a production process represented by a hierarchical structure within the ISA-95 standard might comprise a Production Schedule entity comprising at least one Production Request entity that might be defined according to a Product Production Rule entity. The Production Request entity may comprise at least one Segment Requirement entity associated to a Process or Product Segment entity, and a Requested Segment Response entity designed for allowing a communication between MES systems. The Segment Requirement entity may comprise different entities, like Production Parameter, Personnel Requirement, Equipment Requirement, Material Produced Requirement, Material Consumed Requirement, and Consumable Expected entities. The Production Parameter entity is generally associated to either a Product Parameter entity or a Process Segment Parameter entity. The Production Parameter is thus one of the entities belonging to the Segment Requirement entity. The Production Parameter entity represents production parameters used during or involved for the production. An example may be the velocity or the working temperature for an equipment. Usually during production, the production parameters are used to drive the production, for example to set an equipment velocity/temperature. The Personnel Requirement entity represents the personnel resources needed by the segment requirement for its execution. It might comprise a Personnel Requirement Property entity, which may itself comprise a Personnel Model entity. The Personnel Requirement Property and the Personnel Model entity usually are designed for providing generic information related to the personnel resources. Similarly, the Equipment Requirement entity might be associated to at least one Equipment Requirement Property entity that may correspond to an element in an Equipment Model entity. Also, the Material Produced and Material Consumed Requirements entities may respectively be each associated to at least one Material Produced Requirement Property entity and one Material Consumed Requirement Property entity that may correspond to at least one element in a Material Model entity. In other words, each of the Personnel, Equipment, and Material Model entities, comprises some characteristics of the personnel, the equipment and the material, that help in choosing the right personnel, equipment or material for achieving a production request. The Segment Requirement entity may also comprise a Consumable Expected entity designed for representing a potentially used material and which may be associated for example to at least one Consumable Expected Property entity that represents property information of the potentially used material.

The entities are thus connected with one another according to a structural representation of the production request and forming a system capable of exchanging and providing information. Connections between said entities and according to said structural (or hierarchical) representation are in particular designed for providing to the Production Schedule entity, information (like quantity of material, potentially used material, personnel required, velocity of a process, ...) allowing a correct evaluation or modelling of the production, so that the production activities might be precisely evaluated, prepared and scheduled for satisfying each production request and thus optimizing the production process.

In this hierarchical representation, the Personnel Requirements include in particular people required to carry out the production activities necessary for achieving the production request. The Personnel Requirement indicates in particular which personnel skills are needed for achieving said production request. Unfortunately, the indication of personnel skills is generally not sufficient for a correct achievement of a production process. For example, workers in a shop-floor do not always rely only on their skills, but may need some manuals, documents and instructions in order to carry out their work correctly. Such documents may be paper documents, but more often they are in an electronic form.

Consequently, a direct access to electronic documents or instructions related to and interacting with a production process based on the ISA-95 standard and that are needed in real time by the personnel for carrying out their work correctly while working on a production request based on said ISA-95 standard does at the moment not exist. In other words, a direct access for the personnel to work instructions compliant with the ISA-95 standard, like documents or instructions concerning machines involved in the production process, or interactive form to be completed by the personnel or automatically completed before or after some production steps, or documents designed for collecting production information from the personnel before, during or after a production process is not possible with the actual production process based on the ISA-95 standard.

Troubles in the production process may result from this non-direct access to work instruction while carrying through a production request based on the ISA-95 standard. For example, some delays in the production may arise from missing information, documents or instructions. Indeed, workers may lose a lot of time in searching for documents or instructions that do not belong to their skills. Then, a paper document can be used by only one user at the same time, while more than one user might want to consult a same document at a same time and at different locations in some plants.

Moreover, solution providers may have to implement proprietary document systems to each particular step of a production process, since they do not fit in the ISA-95 standard. Indeed, the ISA-95 standard is not capable of providing any support for carrying information related to work instruction for the personnel.

It is therefore an objective of the present invention to provide a system and a method for automatically managing and providing a personnel work instruction to personnel involved in a production activity based on an ISA-95 standard, with a configurable level of security and flexibility, and avoiding therefore the above-mentioned problems. In particular, the present invention aims also to enable one or more users to simultaneously select and remotely access various work instructions, as well as a same instruction at a same time, and to provide an automated process directing the personnel to a desired work instruction.

The objective is achieved according to the present invention by a method for providing an electronic work instruction for a production activity, compliant with an ISA-95 standard and in particular designed for providing said electronic work instruction to a production process personnel, the method comprising the steps of:
- providing a production process based on the ISA-95 standard with a connection designed for exchanging at least one electronic work instruction with an Electronic Work Instruction (EWI) entity compliant with said ISA-95 standard. Said connection allows in particular an interaction between said EWI entity and the production process based on the ISA-95 standard by communicating information related to the production activity of the production process personnel between the production process based on the ISA-95 standard and the EWI entity;
- providing said production process with said EWI entity capable of loading and storing, for example, respectively from and in a database, at least one electronic work instruction;
- providing an access to the electronic work instruction, in particular, providing the production process personnel with said access. In other words, said access is in particular designed for allowing the production process personnel to load, read, modify, store said electronic work instruction.

The objective is achieved according to the present invention by a system for providing an electronic work instruction for a production activity, compliant with an ISA-95 standard and in particular designed for providing said electronic work instruction to a production process personnel, the system comprising:
- a connection designed for exchanging at least one electronic work instruction between a production process based on the ISA-95 standard and an EWI entity. Said connection is in particular capable of supporting a communication of information related to the production activity of the production process personnel, between said EWI entity and the production process based on the ISA-95 standard;
- said Electronic Work Instruction entity designed for being compliant with said ISA-95 standard and capable of loading and storing, for example, respectively from and in a database, at least one electronic work instruction;
- means for accessing the electronic work instruction, in particular said means are designed for the production process personnel. In particular, said means for accessing the electronic work instruction comprise an interactive tool designed for allowing the production process personnel to load, read, modify, store the electronic work instruction.

According to the invention, the electronic work instruction is an electronic document or an instruction that is related to the working activities carried out by the production process personnel, i.e. production line workers, operators, and that is used by the production process personnel before, during or after the execution of a production request. The EWI entity is compatible with the ISA-95 standard and allows thus to provide the production process personnel with electronic work instructions that may interact with the ISA-95 standard model of a production process.

In other words, the present invention allows to embed in a hierarchical representation of a production process based on the ISA-95 standard, an EWI entity compatible with said ISA-95 standard, and which is capable of providing electronic documents and instructions to the production process personnel, said electronic documents and instructions being accessible at the working place of the production process personnel by means of said means for accessing the electronic work instruction. Advantageously, according to the present invention, electronic work instructions, related for example to an equipment, are directly accessible for the production process personnel that is physically on the working line and has to perform some physical actions on said equipment. Contrary to previous production processes based on the ISA-95 standard, the present invention allows the production process personnel to consult electronic information related to their production activities directly from the ISA-95 standard, i.e. directly from the interface that is between an enterprise and a control system of the production process.

Moreover, the system according to the invention is designed for allowing the production process personnel to modify or even create electronic work instruction which might be stored in their modified, unmodified or created form in the EWI entity. Moreover, the EWI entity according to the invention is capable of tracing an electronic work instruction by recording a temporal evolution of said electronic work instruction.

In particular, the method according to the invention may comprise the step of providing said Electronic Work Instruction entity with an Electronic Work Instruction Model entity according to the ISA-95 standard. Providing the EWI entity with the EWI Model entity advantageously allows to associate at least one electronic work instruction model to one electronic work instruction. Consequently, one electronic work instruction might be represented by several electronic work instruction models, each of said electronic work instruction model being a source of generic information for the electronic work instruction to which it refers. It is for example information about graphical user interfaces, about a type of document, a set of forms to be displayed, area for capturing information provided by the production process personnel, etc. In other words, the EWI entity comprises said EWI Model entity capable of providing the EWI entity with at least one model of electronic work instruction.

According to the invention, the EWI entity comprises electronic work instruction, i.e. information related to production activities needed for satisfying a production request. Said information might be stored in a database connected to the EWI entity, so that said EWI entity might be capable of automatically loading or storing electronic work instructions respectively from and in said database. Consequently, the loading and storing of at least one electronic work instruction is done respectively from and in a database that might be accessible through the automated interface ISA-95 standard.

### Brief description of the drawings

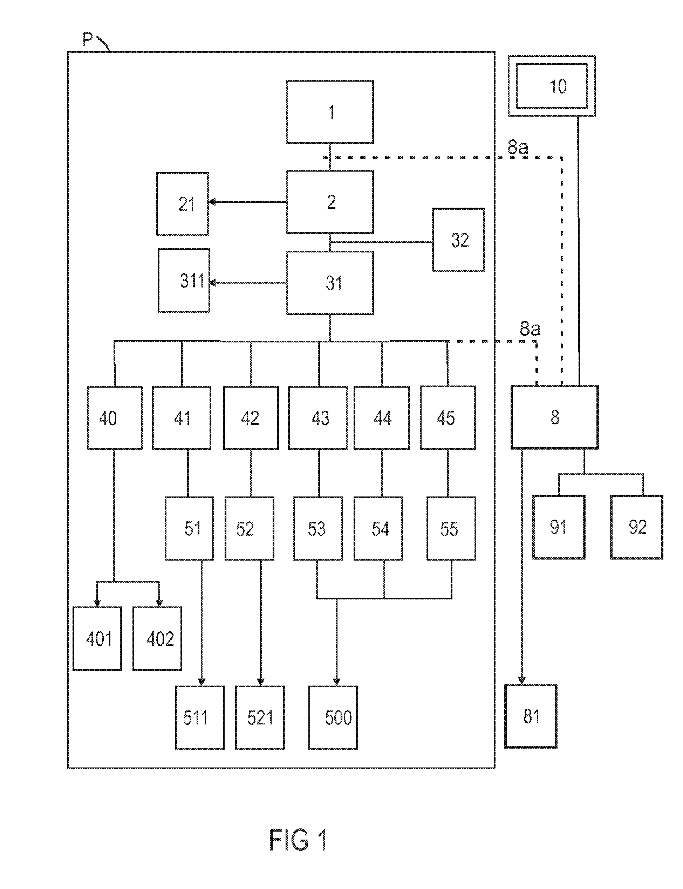

Figure 1 schematically represents an example of a system for providing an electronic work instruction to a production process based on the ISA-95 standard.

### Detailed description

In Figure 1, a production process of a product is schematically represented by a hierarchical structure P according to an ISA-95 standard capable of managing relevant information involved in the manufacture of said product, and serving as basis for a MES. Said hierarchical structure P might comprise a Production Schedule entity 1 comprising at least one Production Request entity 2 that might be defined according to a Product Production Rule entity 21. The Production Request entity 2 may comprise at least one Segment Requirement entity 31 which corresponds to process or product segments of a Process or Product Segment entity 311, and may or may not comprise a Requested Segment Response entity 32 that is designed for allowing a communication between said MES and other MES systems.

The Segment Requirement entity 31 may comprise different entities, like Production Parameter 40, Personnel requirement 41, Equipment Requirement 42, Material Produced Requirement 43, Material Consumed Requirement 44, and Consumable Expected 45 entities. The Production Parameter entity 40 is generally associated to either a Product Parameter entity 401 or a Process Segment Parameter entity 402. The Production Parameter entity 40 represents production parameters used during or involved for the production. An example may be the velocity or the working temperature defined for an equipment. Usually during production, the production parameters are used to drive the production, for example to set an equipment velocity/temperature. The Personnel Requirement entity 41 represents the personnel resources needed by the Segment Requirement entity 31 for its execution. It might comprise a Personnel Requirement Property entity 51, which may correspond to elements in a Personnel Model entity 511. The Personnel Requirement Property entity 51 and the Personnel Model entity 511 are usually designed for providing generic information related to the personnel resources. Similarly, the Equipment Requirement entity 42 might be associated to at least one Equipment Requirement Property entity 52 that may correspond to an element in an Equipment Model entity 521. Also, the Material Produced and Material Consumed Requirements 43, 44 entities may respectively be each associated to at least one Material Produced Requirement Property entity 53 and one Material Consumed Requirement Property entity 54 that may correspond to at least one element in a Material Model entity 500. In other words, each of the Personnel, Equipment, and Material Model entities 511, 521, 500, comprises some characteristics of the personnel, the equipment and the material, that help in choosing the right personnel, equipment or material for the production process. The Segment Requirement entity 31 may also comprise a Consumable Expected 45 entity designed for representing a potentially used material and which may be associated for example to at least one Consumable Expected Property entity 55 that represents property information of the potentially used material, and that may correspond to at least one element in the Material Model entity 500.

The above-mentioned description of Figure 1 describes a conventional ISA-95 standard that serves for developing an automated interface between an enterprise and a control system of the production process. This ISA-95 standard does not foresee in its hierarchical representation a place to define document and instructions for an operator or worker that physically is working on a production line and has to perform some physical actions on, at least, one equipment. In fact, the conventional ISA-95 standard does not provide, contrary to the present invention, a supporting tool for tracing an interaction between the production process and the production activity carried out by the personnel itself, and consequently, no documentation may support or store such interaction. For example, a MES system compliant with the ISA-95 standard may not only require to provide information, but also to get information from the personnel.

According to the present invention, Figure 1 comprises a system for providing an electronic work instruction for a production activity of a production process personnel, compliant with the ISA-95 standard and designed for providing said electronic work instruction to the production process personnel. Said system comprises:
- at least one connection 8a designed for exchanging at least one electronic work instruction between a production process based on the ISA-95 standard and an Electronic Work Instruction entity 8;
- said EWI entity 8 designed for being compliant with said ISA-95 standard of the production process and capable of loading and storing at least one electronic work instruction;
- means 10 for accessing the electronic work instruction.

In particular, the means 10 for accessing the electronic work instruction are designed for providing to the production process personnel at least one interactive tool capable of allowing the production process personnel to load, read, modify, and store the electronic work instruction, in particular from any production process personnel working place location. Moreover, said means 10 for accessing the electronic work instruction are in particular capable of exchanging data, for example data related to the electronic work instruction, with the EWI entity 8, so that the production process personnel may load, read, modify and store electronic work instruction using said means 10.

In particular, the EWI entity 8 corresponds to elements comprised in an EWI Model entity 81. Said elements are information needed by the production process personnel for carrying out their working activities related to the production process. They are for example information about graphical user interfaces, form corresponding to each step of a production process and that have to be displayed to the production process personnel, engineering steps that have to be followed for achieving a production step. In particular, each form may contain a set of electronic documents and a set of areas on said documents, said areas being able to capture a production process personnel input. The EWI 8 is capable of choosing in the EWI Model entity 81 the elements needed by the production process personnel for carrying out their work correctly. For example, each EWI entity 8 is capable of storing information about which graphical user interfaces (GUIs) must be used by the production process personnel to navigate an electronic document.

Moreover, each EWI entity 8 might be designed for comprising at least relevant information for a single step of the production process. Consequently, each step of a production process might be associated to a dedicated EWI entity 8, or the whole production process might be associated to only one EWI entity 8.

In other words, the EWI entity 8 might be associated to a Production Request entity 2, so that, according to the invention, the Production Schedule entity 1 comprises at least a Production Request entity 2 and an EWI entity 8. Or, the EWI entity 8 might also be associated to the single step of the production process, for example to single entities 40, 41, 42, 43, 44, 44, 45 comprised in a Segment Requirement entity 31 by means of the connection 8a. Finally, one main EWI entity 8 might be associated to the whole production process, and another minor EWI 8 entity might be associated to a single step of the production process. In particular, the EWI entity 8 can be independently associated to a production process step in engineering environment (e.g. product definition) and/or runtime environment (e.g. production orders).

In addition, each EWI entity 8 is in particular capable of comprising one or more links to electronic documents, which can be for example stored in a database 92 or in an ordinary file system 91. Several kinds of electronic documents can be associated to manufacturing operations of the production process. These electronic documents can contain, for example, textual instructions for shop-floor operators according to various types of files, like Portable Document Format, Microsoft Word format, OASIS Open Document Format, or also drawings of product parts to be assembled.

The EWI entity 8 is also capable of versioning said electronic documents. For example, many different versions of a same electronic document can be stored by means of the EWI entity 8, so that changes in the electronic document can be applied without losing the original electronic document. Moreover, the EWI entity 8 is in particular capable of automatically arranging in sequence electronic documents, so that the production process personnel has a direct indication of a consultation order of said electronic documents.

According to the invention, the EWI entity 8 is also capable of sending said electronic documents to the means 10 for allowing their visualization by the production process personnel and, if needed, for allowing a modification of said electronic document by the production process personnel. Thus, the EWI entity 8 is not only capable of providing information to the production process personnel, but also to get information related to the production process from the production process personnel. In other words, the EWI entity 8 is capable of collecting data from the production process personnel, in particular by means of the means 10 for accessing the electronic work instruction. For example, said data are input filled by a production process personnel in an electronic document, like an interactive form, during the production process, or said data are notes that can be added to a drawing before, after or during the production process.

The connection 8a might be in particular designed for making the electronic work instruction compatible with the ISA-95 standard used for modelling the production process. Said connection 8a allows the communication of the EWI entity 8 with other entities of the production process based on the ISA-95 standard.

Finally, the EWI entity 8 makes possible to manage electronic work instruction in a MES system based on the ISA-95 standard, by providing an electronic access to the electronic work instruction before, during or after a production step.

Thus, the advantages of the present invention are:
- a centralization of work instructions;
- a possibility of tracing the activity of the production process personnel, since electronic work instructions might be stored at different steps of the production process;
- a possibility of consulting a same document at different location at a same time, since the EWI entity 8 might be associated to the whole production process, as well as to single steps of the production process;
- a place saving for documentation since documents are managed electronically;
- a time saving for searching documents, since all documents are grouped within the EWI entity 8 in electronic format;
- a facilitation of work instruction management;
- a possibility of storing electronic work instruction or documents.

## Claims

1. Method for providing an electronic work instruction for a production activity of a production process personnel compliant with an ISA-95 standard, the method comprising the steps of:
- providing a production process based on the ISA-95 standard with a connection (8a) designed for exchanging at least one electronic work instruction with an Electronic Work Instruction entity (8) compliant with said ISA-95 standard;
- providing said production process with said Electronic Work Instruction entity (8) capable of loading and storing at least one electronic work instruction;
- providing an access to the electronic work instruction.

2. Method according to claim 1, further comprising the step of providing said Electronic Work Instruction entity (8) with an Electronic Work Instruction Model entity (81) according to the ISA-95 standard.

3. Method according to one of the claims 1 or 2, **characterized in that** the access to the electronic work instruction is designed for allowing the production process personnel to load, read, modify, store said electronic work instruction.

4. Method according to any of the preceding claims, wherein the loading and storing of at least one electronic work instruction is done respectively from and in a database (92).

5. System for providing an electronic work instruction for a production activity of a production process personnel compliant with an ISA-95 standard, the system comprising:
- a connection (8a) designed for exchanging at least one electronic work instruction between a production process based on the ISA-95 standard and an Electronic Work Instruction entity (8);
- said Electronic Work Instruction entity (8) designed for being compliant with said ISA-95 standard and capable of loading and storing at least one electronic work instruction;
- means (10) for accessing the electronic work instruction.

6. System according to claim 5, further **characterized in that** the Electronic Work Instruction entity (8) comprises an Electronic Work Instruction Model entity (81) capable of providing the Electronic Work Instruction entity (8) with at least one model of electronic work instruction.

7. System according to one of the claims 5 or 6, **characterized in that** the means (10) for accessing the electronic work instruction comprise an interactive tool designed for allowing the production process personnel to load, read, modify, store the electronic work instruction.

8. System according to any of the preceding claims, **characterized in that** the Electronic Work Instruction entity (8) is capable of loading from and storing in a database (92) at least one electronic work instruction.
